# EUROPEAN PATENT APPLICATION

(11) **EP 4 575 582 A1**
(43) Date of publication of application: **25.06.2025**
(21) Application number: 23219314.4
(22) Date of filing: 21.12.2023
(51) Int. Cl.: G01S 19/50, G08G 1/01

(54) **METHOD AND PROCESSING SYSTEM FOR PROCESSING PROBE DATA FOR PERFORMANCE OF AT LEAST ONE LANE LEVEL TRAFFIC-BASED FUNCTION**

(71) Applicant: TomTom Traffic B.V., 1011 AC Amsterdam (NL)
(72) Inventor: Witte, Nikolaus, 1011AC Amsterdam (NL)
(74) Representative: Meier, Florian

(57) **Abstract**

To improve prove lane assignment for performing at least one lane level traffic-based function, a processing system (20) processes probe data (48) from a plurality of probes travelling on a navigable network. The probe data (48) comprises global navigation satellite system (GNSS)-based position data. The processing system (20) determines a lane-specific offset in a direction transverse to an extension direction of the segment based at least on the probe data (48) from probes on the segment.

## Description

### TECHNICAL FIELD

Embodiments of the invention relate to techniques associated with processing probe data for performing a lane level traffic-based function. Embodiments of the invention relate in particular to techniques useful in processing probe data to determine lane-specific data such as a lane-specific speed.

### BACKGROUND

Routing, navigation, driver assistance, and automated driving are widely used. These techniques use electronic map data in combination with a global navigation satellite system (GNSS)-based vehicle location and/or other sensor data to provide accurate guidance, driver assistance, and/or enable autonomous driving.

More recently, there is a trend to perform routing, navigation, driver assistance and/or other function at a lane level, instead of just at the road level. This trend is driven by several factors that aim to enhance safety, efficiency, and precision in vehicle operation. Examples for such factors include:
- Improved Precision: Roads often consist of multiple lanes (for at least one driving direction), each with its own specific characteristics, such as different speed limits or dedicated turn lanes. By considering the lane-level information, routing and navigation systems can provide more accurate instructions and guidance, ensuring that drivers take the appropriate lane for their intended maneuvers.
- Enhanced Safety: Lane-level routing and driver assistance systems enable better lane-keeping and lane-changing functionalities. By understanding the lane-specific information, these systems can help drivers maintain their position within the lanes, make safe lane changes, and avoid potential collisions.
- Efficient Route Planning: Lane-level routing helps optimize route planning by taking into account lane-specific factors, such as high-occupancy vehicle (HOV) lanes, toll lanes, and/or turn-dependent jams. This ensures that drivers are directed to the appropriate lane for efficient routing.
- Advanced Driver Assistance Systems (ADAS): Lane-level information is also important for ADAS techniques, such as lane-keeping assist or adaptive cruise control. At least some ADAS systems rely on accurate lane detection to provide alerts or automatic control, e.g., for lane departure prevention, maintaining safe distances from vehicles in adjacent lanes, and/or lane changes (e.g., comfortable lane changes over time).
- Autonomous vehicle functions: Lane-level data is also important for autonomous vehicles to navigate accurately and safely. By utilizing lane-level data, automated driving systems can precisely analyze and interpret lane markings, signs, and other lane-specific information to make informed decisions and ensure safe and reliable operation.

To take full advantage of the technical advantages offered by functions that are performed on lane level, an assignment of vehicles to roads must be made. This is a specific example of map matching, in which a position of a vehicle is linked to a part of an electronic map. Assigning vehicles to lanes can be a relevant issue both for vehicles that provide probe data from which lane level traffic-based information is generated and for vehicles which use the lane level-data. Map matching is often performed using a GNSS-based position in combination with lane information included in an electronic map. There are various scenarios where such an approach may be associated with an undesirably large map matching error (MME). An MME relates to a lateral offset of GNSS-based position data (such as a GPS fix) to a matched probe position on a map. Examples for root causes for an MME that can affect the reliability and safety of lane level-based functions include: temporary changes in lane geometry (such as temporary lane swings); reflections of GNSS signals off structures (such as buildings or terrestrial surface structures) that can bring about an offset in the GNSS-based position, which in turn leads to an increased MME; GNSS speed variations that can be caused by atmospheric effects and that can also bring about an offset in the GNSS-based position, which in turn leads to an increased MME.

In view of the above, there is a need for improved methods, devices, and systems useful in association with lane level-based functions, such as lane-level based functions of routing, navigation, driver assistance, ADAS, and/or autonomous driving.

### SUMMARY

It is an object of embodiments of the invention to provide methods, systems, and/or machine-readable instruction code that provide enhanced techniques of assigning vehicles to a lane for performance of a lane level traffic-based function. It is in particular an object of embodiments to provide methods, systems, and/or machine-readable instruction code operative to perform or assist in performance of a lane level traffic-based function, while mitigating issues associated with map matching errors caused by situations such as changes in lane geometry (e.g., a lane swing) and/or systematic position offsets caused by GNSS signal reflections and/or atmospheric signal speed variations.

According to embodiments of the invention, a method, a processing system, a system, and machine-readable instruction code as recited in the independent claims are provided. The dependent claims define preferred and advantageous embodiments.

According to an aspect of the invention, a method of processing probe data for performance of at least one lane level traffic-based function is provided. The method comprises receiving, by a processing system, the probe data from a plurality of probes travelling on a navigable network, wherein the probe data comprises global navigation satellite system (GNSS)-based position data. The method comprises determining, by the processing system, lane-specific data for a segment of the navigable network identified based at least on the GNSS-based position data, wherein determining the lane-specific data comprises determining a lane-specific offset in a direction transverse to an extension direction of the segment based at least on the probe data from probes on the segment. The method may comprise providing or using the lane-specific data for the performance of the at least one lane level traffic-based function.

Various effects and advantages are associated with the method. By processing the GNSS-based position data of probes on the segment, a lane-specific offset in a direction transverse to an extension direction of the segment can be identified in a data-driven manner, using probe data from an ensemble of probes. Thus, possible changes in GNSS-based positions obtained by probes on the respective segment caused by changes in lane arrangement and/or geometry (due to, e.g., construction or maintenance work) and/or by shifts in the GNSS-based position caused by, e.g., GNSS signal reflections off structures in proximity to the segment can be taken into account when assigning probes to lanes. This facilitates aggregating lane-specific data other than the lane-specific offset (the latter being useful for use in reducing map matching errors (MME) in lane assignment), such as lane-specific speeds and/or lane-specific blockages. As previously explained, lane-specific data is important for performing lane level traffic-based functions, such as routing, navigation, driver assistance, Advanced Driver Assistance System (ADAS) functions, and/or autonomous driving functions that are dependent on traffic at the lane level. Thus, mitigating the risk of potential inaccuracies in performing a lane assignment enhances the reliability and safety of lane level traffic-based functions, such as routing, navigation, driver assistance, ADAS functions, and/or autonomous driving functions that are dependent on traffic at the lane level.

The lane-specific offset may define, for each one of several lanes of the segment, an offset of the lane relative to a lane position in the direction transverse to the extension direction that is determined in accordance with map data.

Thereby, the lane-specific offset may be determined relative to lane positions expected in accordance with the map data. This facilitates determining, based on the lane-specific offset, whether there is a change in road geometry and/or a shift in the GNSS-based position that needs to be taken into account when assigning probes to lanes on the segment.

The lane positions expected according to the map data need not be explicitly defined by the map data, but may be defined by quantities such as number of lanes and/or a road class (from which the lane width can be determined).

Thus, the techniques disclosed herein are applicable for a wide variety of electronic map data implementations, including electronic map data that allows the lane positions to be determined in the direction transverse to the extension direction of the segment.

The lane-specific offset may define, for each one of several lanes of the segment, a lane position in the direction transverse to the extension direction relative to a line defined by the map data (such as a line extending between a pair of nodes representing the start and end points of the segment).

Thereby, the lane-specific offset may be determined relative to such a lane, without requiring a difference to be determined relative to lane positions expected based on the map data. This facilitates the determination of the lane-specific offset.

Providing or using the lane-specific data may comprise correcting an error in an GNSS-based lane assignment based at least on the lane-specific offset.

This allows the lane-specific offset, which is determined in a data-driven manner from the probe data of probes on a segment, to be used by the processing system for reducing the error in assigning probes to lanes. In particular, changes in lane geometry and/or offsets caused by GNSS signal reflections can be compensated, at least in part, in that the processing system takes into account the lane-specific offset (which quantifies, e.g., the change in lane geometry and/or the offset caused by GNSS signal reflections) when determining on which lane of the segment a vehicle travelling on the segment is located.

Alternatively or additionally, providing or using the lane-specific data may comprise generating output based at least on the lane-specific offset, the output enabling an error in an GNSS-based lane assignment to be corrected.

This allows the lane-specific offset, which is determined in a data-driven manner from the probe data of probes on a segment, to be used by a device or system (such as an ADAS system or an autonomous driving system) different from the processing system, for reducing the error in assigning probes to lanes. In particular, changes in lane geometry and/or offsets caused by GNSS signal reflections can be compensated, at least in part, in that the device or system different from the processing system receives the output and takes into account the lane-specific offset (which quantifies, e.g., the change in lane geometry and/or the offset caused by GNSS signal reflections) when determining on which lane of the segment a vehicle travelling on the segment is located.

The GNSS-based lane assignment may assign the GNSS-based position data to a lane of the segment. The GNSS-based lane assignment may comprise a map matching.

Thereby, the lane-specific offset can be used to reduce MMEs in determining on which lane of the segment a vehicle travelling on the segment is located.

The processing system may be operative to determine the lane-specific data comprising the lane-specific offset in a spatially resolved manner for a plurality of locations on the navigable network, respectively based on probe data obtained from probes travelling on the navigable network in proximity to or at the plurality of locations.

Thereby, the processing system is operative to take into account that important root causes for MMEs in assigning probes to lanes are spatially varying, such as construction or maintenance work that may locally change the lane geometry in part of the navigable network but not in other parts.

Providing or using the lane-specific data may comprise correcting an error in an GNSS-based lane assignment for a probe or vehicle travelling on the navigable network based at least on the lane-specific offset determined for the location at which the probe or vehicle is travelling on the navigable network and/or based at least on one or several lane-specific offsets determined for one or several locations in proximity to the location the probe or vehicle is travelling on the navigable network.

This allows the lane-specific offset, which is determined in a data-driven manner from the probe data of probes that have previously travelled in proximity to the relevant location, to be used by the processing system for reducing the error in assigning probes to lanes.

Alternatively or additionally, providing or using the lane-specific data may comprise generating output based at least on the lane-specific offsets determined for the plurality of locations on the navigable network, the output enabling an error in an GNSS-based lane assignment to be corrected.

This allows the lane-specific offset, which is determined in a data-driven manner from the probe data of probes that have previously travelled in proximity to the relevant location, to be used by a device or system (e.g., an ADAS or autonomous driving system) for reducing the error in assigning probes to lanes.

The lane-specific-offset may comprise an offset caused by at least one of: GNSS signal reflections from structures adjacent the segment; atmospheric effects on GNSS signal propagation; temporary changes in lane geometry.

Thereby, important root causes for incorrect lane assignment can be mitigated, making it possible to quantify the MM E and compensate it at least in part. These root causes can adversely affect lane assignment, while being present for a sufficiently long period to allow the lane-specific offset to be determined from the probe data of several probes, using the techniques disclosed herein.

Providing or using the lane-specific data may comprise identifying a lane geometry change.

Thereby, an important root cause for incorrect lane assignment can be mitigated, making it possible to compensate it at least in part. The lane geometry change can adversely affect lane assignment, while being present for a sufficiently long period to allow the lane-specific offset to be determined from the probe data of several probes, using the techniques disclosed herein. Moreover, a lane geometry change can have particularly severe impact on lane assignment, e.g., in cases where construction and/or maintenance work requires a lane swing that causes a lane for a first driving direction to be routed over a portion that is reserved to a second driving direction opposite the first driving direction, absent the construction and/or maintenance work. In such cases, the identification of the lane geometry change, as quantified by the lane-specific offset, is particularly relevant for enhancing safety in performing a lane level traffic-based function.

The lane geometry change may comprise a temporary change in lane routing caused by maintenance or construction work.

Thereby, an important root cause for incorrect lane assignment can be mitigated, making it possible to compensate it at least in part. The lane geometry change can adversely affect lane assignment, while being present for a sufficiently long period to allow the lane-specific offset to be determined from the probe data of several probes, using the techniques disclosed herein.

The lane geometry change may be associated with an offset of the lane relative to a lane position expected according to electronic map data in the direction transverse to the extension direction of the segment.

Thereby, changes in lane geometry that are particularly relevant for correct assignment of probes or vehicles to lanes can be addressed by the disclosed techniques.

The lane geometry change may include a lane swing that cause a lane for a first driving direction to be rerouted onto an area that, absent the rerouting, is assigned to a second driving direction opposite the first driving direction.

Thereby, effects of a lane swing on performing a lane level traffic-based function can be addressed by the disclosed techniques.

The lane geometry change may include a repositioning of a lane for a driving direction such that the lane is shifted onto an area that, absent the shift, is assigned to another lane with the driving direction.

Thereby, effects of such lane repositioning, which increases the risk of incorrect lane assignment, on performing a lane level traffic-based function can be addressed by the disclosed techniques.

Determining the lane-specific offset may comprise determining the lane-specific-offset for a location on the segment, comprising determining statistical information on GNSS-based vehicle coordinates in the direction transverse to the extension direction at the location on the segment and/or in a region surrounding the location on the segment, and determining the lane-specific offset for at least one lane and optionally for several lanes based on the determined statistical information. The statistical information may comprise a statistical distribution of number of probes as a function of GNSS-based position in the direction transverse to the extension direction (e.g., number of probes in various bins, each associated with a range of GNSS-based positions in the direction transverse to the extension direction).

Thereby, the lane-specific offset can be determined in an objective, data-driven manner, for use in reducing the risk in incorrect lane assignment and performing a lane level traffic-based function in a more reliable and safer manner.

Determining the lane-specific offset may comprise determining a map-based lane position based on the electronic map data, the map-based lane position being determined at the location and being a lane position in the direction transverse to the extension direction, and determining the lane-specific offset as an offset of a lane position determined based on the statistical distribution from the map-based lane position.

Thereby, the lane-specific offset can be determined relative to the lane position expected according to the map data in an objective, data-driven manner, for use in reducing the risk in incorrect lane assignment and performing a lane level traffic-based function in a more reliable and safer manner.

Determining the lane position based on the statistical distribution may comprise determining the lane position based on at least one mean or median of the statistical distribution, optionally based on a variance or other deviation measure of the statistical distribution.

Thereby, the lane-specific offset can be determined efficiently in a data-driven manner.

The statistical distribution may comprise a multimodal statistical distribution, for at least some locations on the navigable network, with the multimodal statistical distribution having several local maxima. Determining the lane position may comprise determining, for several lanes of the segment, several associated lane-specific offsets based on the GNSS-based position data (in the direction transverse to the extension direction) at which the multimodal statistical distribution has its local maxima.

Thereby, the lane-specific offset can be determined efficiently in a data-driven manner for several lanes.

Determining the lane-specific offset based on the statistical distribution may comprise correcting for a traffic rule-based lane bias.

Thereby, effects such as (local) traffic rules encouraging or requiring vehicles to prefer or use one lane over another (such as a requirement to drive on a right-hand lane where possible) may be taken into account when determining the lane-specific offset from a statistical distribution of vehicles.

Determining the lane-specific offset may comprise determining the lane-specific offset in response to ascertaining that, for the location for which the lane-specific offset is determined, GNSS-based position data: are available from a number of probes exceeding a probe number threshold (such as at least 10, at least 20, or at least 50); and/or have been monitored over a monitoring period (such as at least 1 hour, at least 2 hours, at least 5 hours, at least 12 hours, at least 24 hours, at least 2 days, at least 5 days, at least 7 days, or longer); and/or a variance or other metric for variations in the statistical distribution fulfills a reliability criterion (such as being less than a threshold).

Thereby, the lane-specific offset can be determined conditionally dependent on and in response to ascertaining that at least one criterion is fulfilled which indicates that sufficient probe data can be taken into account for determining the lane-specific offset. The reliability of assigning probes (and, thus, vehicles) to lanes and, thus, the safety of the lane level traffic-based function is enhanced thereby.

The electronic map data may have stored therein information that allows lane positions to be determined, including data specifying a number of lanes (which may be implicitly defined, e.g., in a road class) and lane widths (which may also be implicitly defined, e.g., in the road class). Determining the lane-specific offset may comprise processing the data specifying the number of lanes and lane widths to determine the map-based lane positions.

Thereby, the map-based lane positions can be determined based on the electronic map data, such that a modulus of the lane-specific offset is a metric for MMEs at the respective location.

The method may further comprise performing a probe lane assignment, comprising determining on which lanes of the segment the probes on the segment are located based at least on the GNSS-based position data and the lane-specific data.

Thereby, the lane-specific data, and in particular the lane-specific offset, can be used for mitigating issues associated with an MME in assigning probes to lanes.

The probe lane assignment may be performed by the processing system.

Thereby, the processing system itself can use the lane-specific offset to mitigate the risk of incorrect probe lane assignments due to shifts between GPSS-based positions relative to lane positions derivable from map data. More reliable lane assignment increases, in turn, reliability and safety of the at least one lane level traffic-based function.

The probe lane assignment may be performed by a computing system or device different from the processing system and communicatively coupled to the processing system. The computing system or device may comprise a vehicle system (e.g., an ADAS or autonomous driving system) and/or a map distribution system.

Thereby, the computing system or device can use the lane-specific offset determined by the processing system to mitigate the risk of incorrect probe lane assignments due to shifts between GPSS-based positions relative to lane positions derivable from map data. More reliable lane assignment increases, in turn, reliability and safety of the at least one lane level traffic-based function.

The at least one lane level traffic-based function may be performed based on the probe lane assignment.

Thereby, the lane-specific data, and in particular the lane-specific offset, can be used for mitigating issues associated with an MME in determining lane-level speed data, lane-level blockage information, and/or using such lane level traffic-dependent data for performing the at least one lane level traffic-based function.

Determining the lane-specific data may comprise determining a lane-specific speed for each of several lanes of the segment based on probe speeds of the probes on the segment obtained from the probe data.

Thereby, the probe data may be used for both ascertaining the position of the lanes on the segment, in a direction transverse to the extension direction of the segment, and for ascertaining the lane-specific speed.

Determining the lane-specific speed may comprise clustering the probe speeds of the probes on the segment. Determining the lane-specific speed may comprise ascertaining that the probe speeds form distinguishable clusters and determining the lane-specific speed based on a cluster of several clusters responsive to ascertaining that the probe speeds form distinguishable clusters.

Thereby, the probe data may be used to ascertain lane-specific speeds in a manner that relies on probe speeds and, thus, is less sensitive to incorrect assignment of probes to lanes based on GNSS-based position data.

Determining the lane-specific speed may comprise distinguishing lane-specific speed effects from temporal speed effects.

Thereby, effects such as known dependencies of speed on time of day or date of year may be taken into account when ascertaining the lane-specific speeds.

Providing or using the lane-specific data may comprise correcting a lane assignment based on the lane-specific offset and/or the lane-specific speed.

Thereby, the lane-specific data is utilized to improve the reliability of determining on which lane probes are located, which in turn enhances the reliability and safety of the at least one lane level traffic-based function.

The at least one lane level traffic-based function may comprise one, several, or all of: route search or route guidance; identification of incorrect lane data in an electronic map; identification of maintenance work; traffic flow control; deployment of map updates.

Thereby, the lane-specific data can be used for performing one or several lane level traffic-based functions, based at least on the lane-level specific data.

The method may further comprise performing the lane level traffic-based function. The lane level traffic-based function may be performed by or onboard a vehicle, e.g., by a driver assistance system, an ADAS system, an autonomous driving system.

Thereby, the lane-specific data can be used for performing one or several lane level traffic-based functions, based at least on the lane-level specific data.

The at least one lane level traffic-based function may comprise a route search or route guidance. The route search or route guidance may be a route search or route guidance based at least on the lane-specific data for a segment that has physical barriers between lanes assigned to a same driving direction.

Thereby, the risk of incorrectly assigning a probe to a lane other than the one on which it is located is mitigated for the segment having physical barriers between lanes assigned to a same driving direction. In such a case, an incorrect lane assignment has the potential of being particularly detrimental to driving safety. The use of the lane-specific data enhances the safety by mitigating the risk of incorrect assignment of a probe to a lane that is separated by a physical barrier from the lane on which the probe is actually travelling.

According to another aspect of the invention, there is disclosed machine-readable instruction code comprising instructions which, when executed by at least one processing circuit, cause the at least one processing circuit to perform the method of any one aspect or embodiment.

According to another aspect of the invention, there is disclosed a data carrier comprising machine-readable instruction code comprising instructions which, when executed by at least one processing circuit, cause the at least one processing circuit to perform the method of any one aspect or embodiment.

The data carrier may comprise a non-transitory storage medium having stored thereon the machine-readable instruction code.

According to a further aspect, there is disclosed a processing system for processing probe data for performance of at least one lane level traffic-based function. The processing system comprises at least one interface operative to receive the probe data from a plurality of probes travelling on a navigable network, wherein the probe data comprises global navigation satellite system, GNSS,-based position data. The processing system comprises at least one processing circuit operative to: determine lane-specific data for a segment of the navigable network identified based at least on the GNSS-based position data, wherein determining the lane-specific data comprises determining a lane-specific offset in a direction transverse to an extension direction of the segment based at least on the probe data from probes on the segment; and provide or use the lane-specific data for the performance of the at least one lane level traffic-based function.

Various effects and advantages are associated with the processing system. By processing the GNSS-based position data of probes on the segment, the lane-specific offset in the direction transverse to an extension direction of the segment can be identified in a data-driven manner, using probe data from an ensemble of probes. Thus, possible changes in GNSS-based positions obtained by probes on the respective segment caused by changes in lane arrangement and/or geometry (due to, e.g., construction or maintenance work) and/or by shifts in the GNSS-based position caused by, e.g., GNSS signal reflections off structures in proximity to the segment can be taken into account when assigning probes to lanes. This facilitates aggregating lane-specific data other than the lane-specific offset (the latter being useful for use in reducing MME in lane assignment), such as lane-specific speeds and/or lane-specific blockages. As previously explained, lane-specific data is important for performing lane level traffic-based functions, such as routing, navigation, driver assistance, ADAS functions, and/or autonomous driving functions that are dependent on traffic at the lane level. Thus, by mitigating the risk of potential inaccuracies in performing a lane assignment, the processing system enhances the reliability and safety of lane level traffic-based functions, such as routing, navigation, driver assistance, ADAS functions, and/or autonomous driving functions that are dependent on traffic at the lane level.

The processing system may be operative to perform the method according to any aspect or embodiment disclosed herein.

Optional features of the processing system and the features respectively attained thereby may correspond to the features and effects described in association with the method.

According to a further aspect, there is disclosed a system comprising the processing system and at least one device (such as at least one probe which may be included in the plurality of probes or which may be separate therefrom, or another vehicle component such as an ADAS and/or autonomous driving system) operative to receive the lane-specific data and perform the at least one lane level traffic-based function based at least one the lane-specific data.

Thereby, safety is enhanced when performing the at least one lane level traffic-based function.

According to a further aspect, there is disclosed a vehicle comprising an interface (such as a wireless interface) operative to receive the lane-specific data, and further comprising at least one processing device operative to perform at least one lane level traffic-based function based at least one the lane-specific data. The control operation may comprise an actuator control operation. Thereby, safety is enhanced when performing the at least one lane level traffic-based function.

According to a further aspect, there is disclosed a method of reducing the risk of incorrectly determining a lane on which a probe or vehicle is located, comprising using the lane-specific data determined by the method and/or processing system according to an aspect or embodiment when determining on which lane the probe or vehicle is located.

While the techniques disclosed herein may be used for navigation, route search, driver assistance, ADAS, and autonomous driving functions, they are not limited thereto.

### BRIEF DESCRIPTION OF THE DRAWINGS

Embodiments of the invention will be described with reference to the drawings in which similar or corresponding reference signs designate elements having similar or corresponding configuration and/or function.
Figure 1 is a schematic representation of a processing system operative to perform a method of processing probe data for performance of at least one lane level traffic-based function.
Figure 2 is a schematic representation of a lanes of a segment with probes schematically shown thereon.
Figure 3 is a schematic representation of global navigation satellite system (GNSS)-based probe positions relative to lane data of an electronic map.
Figure 4 is a schematic representation of GNSS-based probe positions relative to lane data of an electronic map.
Figure 5 is a schematic representation of at least one processing circuit operative to perform a method of processing probe data for performance of at least one lane level traffic-based function.
Figure 6 is a schematic representation of a statistical distribution of probe positions.
Figure 7 is a schematic representation of a statistical distribution of probe positions.
Figure 8 is a schematic representation of a portion of a navigable network.
Figure 9 is a schematic representation of a road including several segments of a navigable network extending adjacent possible root causes for incorrect lane assignment.
Figure 10 is a flow chart of a method.
Figure 11 is a flow chart of a method.
Figure 12 is a flow chart of a method.
Figure 13 is a flow chart of a method.
Figure 14 is a flow chart of a method.
Figure 15 is a flow chart of a method.
Figure 16 is a schematic representation of a system comprising a plurality of probes and a processing system operative to perform a method of processing probe data for performance of at least one lane level traffic-based function.
Figure 17 is a schematic representation of a system comprising a processing system operative to perform a method of processing probe data for performance of at least one lane level traffic-based function and a vehicle operative to use output generated using the processing system.
Figure 18 is a flow chart of a method.

### DETAILED DESCRIPTION OF EMBODIMENTS

Embodiments of the invention will be described in detail. While some embodiments will be described in association with specific exemplary map layers, the embodiments are not limited thereto.

The features of embodiments may be combined with each other unless specifically stated otherwise.

The techniques disclosed herein in detail are operative to process global navigation satellite system (GNSS)-based position data, optionally in association with other probe data, obtained from a plurality of probes. The techniques are operative to determine, for each one of several locations on a navigable network, a lane-specific offset of a lane of a segment of the navigable network that reflects a position of the lane, in a direction transverse (e.g., perpendicular) to an extension direction of the segment. The techniques disclosed herein are generally operative to use the lane-specific offset, optionally in combination with other lane-specific data, to perform or assist in performance of a lane level traffic-based function.

As used herein, the term "probe" encompasses a navigation device but need not be limited thereto. Probe data may indicate probe traces also for devices that do not perform navigation-related functions. A probe may be an in-dashboard navigation device, a portable navigation device (PND), a mobile terminal (MT) of a cellular communication network (e.g., a smartphone) that may (but does not need to) perform a navigation-related operation, without being limited thereto.

The term "navigation device" has used herein encompasses an in-dashboard navigation device, a portable navigation device (PND), a mobile terminal (MT) of a cellular communication network that performs a navigation-related function, such as a smartphone, without being limited thereto.

As used herein, a "probe" may in particular be a probe that is fixedly or removably provided in a vehicle, so as to move jointly with a vehicle. Thus, a "probe position" is also indicative of a vehicle position, and/or a "probe speed" is also indicative of a vehicle speed. These terms may be interchanged, unless explicitly stated otherwise.

As used herein, a "lane level traffic-based function" refers to a function that takes into account that conditions can be different for different lanes adjacent to each other on a same segment of the navigable network. The different conditions may comprise dynamic lane conditions, such as different (time-varying) speeds or lane blockage, and/or static conditions, such as different lane widths and/or the presence of an impenetrable barrier adjacent a lane that may require different driver assistance, advanced driver assistance system (ADAS), and/or autonomous driving actions to be performed, depending on the lane on which a vehicle is installed. The techniques disclosed herein are operative to allow lane-specific data to be determined more reliably (e.g., by reducing the risk of incorrect probe lane assignment, which in turn increases the quality of any lane level traffic-indicating quantity determined from the probe data, such as lane-specific speeds, presence or absence of physical barriers between lanes, and/or lane swings) and/or to determine, for any device or system that performs the lane level traffic based function, more reliably on which lane that device or vehicle is positioned.

As used herein, a "segment" of the navigable segment encompasses a road segment, without being limited thereto. The segment may be defined in electronic map data by at least two nodes, which in turn may be defined in the electronic map data by their geospatial coordinates (such as latitude and longitude, without being limited thereto). In case of an electronic map that includes road definitions that can include more than two nodes, the techniques disclosed herein are applicable to any segment of such a road between two adjacent nodes of the road definition.

As used herein, an "extension direction" of a segment refers to the direction along which the segment extends. In case of an electronic map that includes road definitions that can include more than two nodes, the techniques disclosed herein are applicable to any segment of such a road between two adjacent nodes of the road definition, which extends along a straight extension direction.

As used herein, a "direction transverse to the extension direction of the segment" refers to a direction that extends transverse (optionally perpendicular) to the extension direction. This direction is also referred to as "lateral" (as it is the left-right direction from the perspective of a vehicle driving along the extension direction on the segment).

As used herein, a "lane-specific offset" refers to how a lane is positioned along the direction transverse to the extension direction of the segment. In other words, the lane-specific offset defines a position of the associated lane, relative to a reference. The reference is not germane and may, e.g., be a position of the respective lane defined by the electronic map data, or a center line of the segment which may be defined in the electronic map data by the line connecting the two nodes at the ends of the segment. Lane-specific offsets for different lanes on the same segment may but do not need to have different values. For illustration, construction work and/or GNSS signal distortions can cause the GNSS-based positions to be shifted, for each of the lanes, by a same amount as compared to the lane positions expected based on the electronic map data.

As used herein, a "lane assignment" refers to assigning a probe to a lane based on GNSS-based position data.

As used herein, "GNSS-based position data" may comprise, for example, GPS-based position data, such as a GPS fix, several GPS fixes, or a GPS trajectory.

As used herein, a "map matching error" (MME) refers to a shift of a GNSS-based position (e.g., a GPS fix) in the lateral direction.

In real-world scenarios, there may exist segments of the navigable network with a significant shift of MMEs (i.e., the GNSS-based position data of probes on that segment exhibits a systematic shift). A lane assignment merely based on the GNSS-based position data (e.g., based on a distance to the center line of the segment) would have a large number of incorrect lane assignments. Such a situation can occur for changed road geometry (e.g., in roadworks with lane swings, outdated electronic map data, etc.) or distorted GNSS signal (e.g., reflections on buildings and/or terrestrial landmarks).

The techniques disclosed herein may be operative to determine, for such segments, the systematic shift, which is useful for enhancing the accuracy in assigning probes to lanes. This is done in a data-driven manner, based on GNSS-based position data from probes on the segment. For illustration, the GNSS-based probe positions in the lateral direction (i.e., the direction transverse to the extension direction of the segment) may be averaged (over time and/or over a number of probes) to improve the probe lane assignment. The improved probe lane assignment, which is attainable based on the lane-specific offset determined from the GNSS-based position data from probes on the segment, in turn enhances the safety of the intended functionality (SOTIF) of a lane level traffic-based function, e.g., a lane level traffic-based driver assistance, ADAS, and/or autonomous driving function.

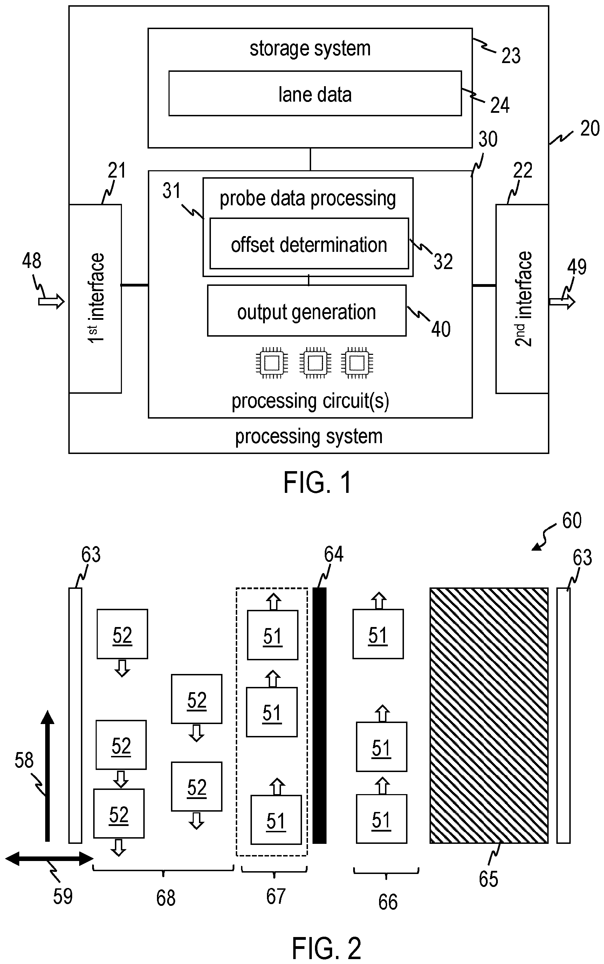

Figure 1 is a schematic representation of a processing system 20 operative to perform a method of processing probe data for performance of at least one lane level traffic-based function.

The processing system 20 comprises at least one interface 21 operative to receive probe data 48 from a plurality of probes. The probe data 48 comprises GNSS-based position data (such as global positioning system (GPS) fixes and/or GPS traces). The processing system 20 comprises at least one processing circuit 30 operative to process the probe data 48. The at least one processing circuit 30 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

The processing system 20 comprises a storage system 23 operative to communicatively interface with a storage system 23 that has stored therein in electronic map data. The electronic map data defines a navigable network. The navigable network comprises nodes and segments extending between at least two nodes. The electronic map data may comprise lane data 24 that indicates the lateral position of lanes (i.e., the position in the direction transverse to the extension direction of a segment of a navigable network) or that allows the lateral position of the lanes to be determined. It is not required that the lateral positions of lanes be explicitly specified. For illustration, the electronic map data may define a number of lanes, optionally in combination with a lane width, from which the processing system 20 can determine the lateral positions of the lanes as expected in accordance with the electronic map data. Alternatively or additionally, the electronic map data may define a number of lanes and a functional road classes or other road classification, from which the processing system 20 can determine the lateral positions of the lanes is expected in accordance with the electronic map data.

The at least one processing circuit 30 is operative to perform a probe data processing 31 of the received probe data. The at least one processing circuit 30 is operative such that the probe data processing 31 comprises at least an offset determination 32, which includes determining a lateral offset of a lane as derived by the processing system 30 from GNSS-based position data in the probe data 48, relative to a reference (such as a road center defined by the straight line connecting the 2 nodes at the end of the segment or a lane center derived from the lane data 24 in the electronic map data).

The at least one processing circuit 30 is operative to perform an output generation 42 which causes output 49 to be provided for use in the performance of at least one lane level traffic-based function. The output generation 40 may generate the output 49 based at least on the offset determined by the offset determination 32. The offset determination 32 may in particular be operative to determine a lane-specific offset for each one of several lanes of a segment, with the output generation 40 being operative to generate the output 49 based at least on the lane-specific offsets for the several lanes of the segment.

It will be appreciated that the determination of the lane-specific offset is in practice performed for several segments of the navigable network, in particular for all such segments for which there is a relevant shift between the GNSS-based positions of probes relative to the lateral lane positions expected according to the electronic map data. Thus, the processing system 20 may be operative to perform the various operations discussed herein for each of a plurality of segments of the navigable network defined by the electronic map data. However, this determination need not be made for all segments of the navigable network.

The at least one processing circuit 30 may be operative such that the output 49 comprises, for each of a plurality of segments of the navigable network, lane-specific data that is based on the lane-specific offset, but which may optionally include lane-specific information other than the lane-specific offset. For illustration, and as will be explained in more detail herein, the at least one processing circuit 30 may be operative to determine the lane-specific offset, use the lane-specific offset to improve a lane assignment of the plurality of probes to lanes, and then determine lane-specific speeds or other lane-specific data based on this improved assignment. In this case, the output 49 may comprise the lane-specific speeds, which are useful for performing functions such as lane level traffic-based route search and/or route guidance, lane level traffic-based cruise control and/or lane keeping assistance, a lane level traffic-based ADAS function, and/or a lane level traffic-based autonomous driving function.

Operation of the techniques disclosed herein will be explained further with reference to an exemplary scenario illustrated in Figure 2, Figure 3, and Figure 4.

Figure 2 shows an exemplary scenario in which a road 60 has several lanes for each of two opposite driving directions. Parts of the road that are normally intended for different driving directions are delimited on one side by a first road delimiter 63 (such as a marking), with a second road delimiter 64 (such as a physical barrier) extending between the parts of the road normally intended for different driving directions. Figure 2 shows the real-world situation in which a portion 65 of the road is not accessible, as may be due to construction, maintenance, or for other reasons. Due to the closure of portion 65, the various lanes are shifted. More specifically, one of the lanes for a first driving direction (upward direction in Figure 2) is shifted to a part 67 of the road that, absent the unavailability of portion 65, is designated for a second driving direction to (downward direction in Figure 2) opposite the first driving direction. The right lane for the first driving direction shifts towards the center barrier 64, into a region 66 that is normally (i.e., absent the unavailability of the portion 65) intended for use by the left lane with the first driving direction. The two lanes with the second driving direction are made narrower and shifted to a region 68 of the road that, absent the unavailability of portion 65, is largely occupied by the right lane in the second driving direction.

The driving directions are along the extension direction 58 of the segment. The situation illustrated in Figure 2 leads to a lane geometry change, including a lane swing to a region 67 of the road, causing the lanes in regions 66, 67 of the road to be separated by the impenetrable barrier 64 even though they have a same driving direction. Generally, the various lanes exhibit a lateral offset along the direction 59 transverse to the extension direction 58.

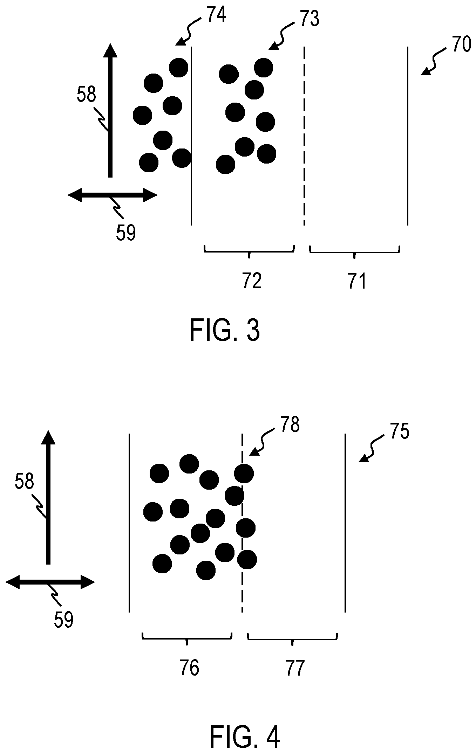

Such a situation is prone to giving rise to a lane assignment errors, which can adversely affect lane level traffic-based functions. Figure 3 and Figure 4 further illustrate how the situation can result in incorrect lane assignment wherein the assignment is performed based on GNSS-based position data.

Figure 3 illustrates an arrangement 70 of two lanes 71, 72 as defined by the electronic map data, with the lanes 71, 72 being designated for the same driving direction and representing the part of the road 60 of Figure 2 in which the unavailable portion 65 is located. The lane geometry changes schematically illustrated in Figure 2 have the effect that probes in vehicles 51 traveling in regions 66, 67 of the road 60 have GNSS-based positions that are offset relative to the lane positions of the lanes 71, 72 as expected according to the electronic map data. Vehicles traveling on the right lane have GNSS-based positions 73 that correspond to the left lane position 72 according to the electronic map data. This may cause incorrect assignment of the GNSS-based position 73 to the left lane, even though the vehicles 51 in region 66 of the road 60 travel on the right lane. Vehicles traveling on the left lane have GNSS-based position 74 that are located to the left of the left lane position 72 according to the electronic map data. This may also cause an assignment issue, for example an incorrect assignment to a lane for the opposite driving direction.

Figure 4 illustrates an arrangement 75 of two lanes 76, 77 as defined by the electronic map data, with the lanes 76, 77 being designated for the same driving direction and representing the part of the road 60 of Figure 2 opposite the part in which the unavailable portion 65 is located (i.e., the region 68 of the road 60). The lane geometry changes schematically illustrated in Figure 2 have the effect that probes in vehicles 52 traveling in region 68 of the road 60 have GNSS-based positions that are offset relative to the lane positions of the lanes 76, 77 as expected according to the electronic map data. Most of the GNSS-based positions 78 of the vehicles 52 in region 68 of the road 60 overlap with the right lane 76 according to the electronic map data. This may also cause an assignment issue, for example an incorrect assignment of vehicles 52 actually travelling on the left lane to the right lane 76. Thus, in this case, a GNSS-based lane assignment may be prone to underestimate the number of vehicles on the left lane (with second /downward driving direction in Figure 2) and to overestimate the number of vehicle on the right lane (again with second /downward driving direction in Figure 2).

In order to identify the potential risk of systematic inaccuracies in lane assignment for several segments of the navigable network, the processing system 20 is operative to detect the lateral offset of GNSS-based positions relative to the lateral lane positions expected according to the electronic map data. The processing system 20 is also operative to enable this lateral offset to be compensated, at least in part, thereby effectively shifting back the GNSS-based positions so that they better align with the lateral lane positions expected according to electronic map data. A lane assignment is performed on this basis, i.e., mitigating the effects of the systematic shift between GNSS-based positions and the lateral lane positions expected according to the electronic map data. The additional lane-specific data may be determined based on this improved lane assignment, as explained in more detail elsewhere herein.

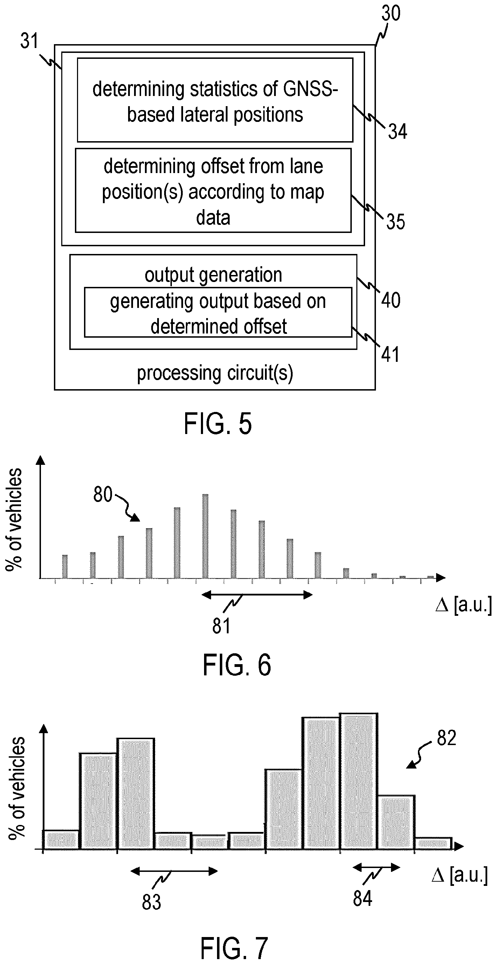

Figure 5 is a schematic representation illustrating operation of the at least one processing circuit 30.

The at least one processing circuit 30 is operative to process the probe data 48 comprising GNSS-based position data for a plurality of probes. For a segment of the navigable network, the at least one processing circuit 30 is operative to perform a determination of statistical information (such as a statistical distribution counting a fraction of vehicles for various bins of lateral positions) of the GNSS-based natural positions of probes on that segment, for example probes passing by a location on the segment. The determined statistical distribution may have a single local maximum or, with more pronounced lane spacing in the real world geometry (such as in Figure 2) potentially even several local maxima (i.e., the statistical distribution may be a multimodal distribution).

The at least one processing circuit 30 is operative to perform an offset determination 35 to determine an offset for each of the lanes based on the determined statistical information on GNSS-based lateral positions. Determining the offset may comprise determining the offset relative to the lateral lane position expected according to electronic map data.

The at least one processing circuit 30 is operative to perform an output generation 40 which comprises a generation 41 of output that is based at least on the determined offset. For illustration, the at least one processing circuit 30 may be operative such that the output generation 40 comprises generating the output 49 such that it includes the lane-specific offsets, which are useful for the systems and/or devices in performing a lane assignment that takes into account, for several segments of the navigable network, whether GNSS-based lateral lane positions in the real-world exhibit a lateral offset relative to map data defined lateral lane positions. Such data allows more accurate lane assignment to be performed, by compensating, at least in part, systematic offsets that may be introduced by lane swing, other lane geometry changes, GNSS signal distortion, or by other root causes.

The at least one processing circuit 30 may be operative such that determining the statistical information (module 34) may comprise recording, for probes passing a location on the segment, respectively a difference between the GNSS-based lateral position of the probe from, e.g., the straight line connecting the two nodes at the ends of the segment. Determining the statistical information may further comprise defining a plurality of ranges for the difference, i.e., bins for determining the statistical information. The bins may be defined based on the previously recorded differences. For illustration, a fixed number of bins may be used, with the lower and upper limits of each bin being defined based on the fixed number of bins and the minimum and maximum difference recorded for the probes. Determining the statistical information may then comprise determining, for each of the bins, a number of fraction of vehicles having a difference of the GNSS-based lateral position from the straight line connecting the two nodes at the ends of the segment that falls within the respective range of the bin.

Figure 6 shows an exemplary statistical distribution 80 determined in this way. The x-axis shows the difference between the GNSS-based lateral position and a reference (such as the straight line connecting the two nodes at the ends of the segment). The y-axis shows the fraction of vehicles for the respective bin. An offset 81 between a GNSS-based lateral lane position and the lane position expected according to electronic map data may be determined based on the statistical distribution 80. For illustration, the offset 81 may be determined by determining the distance at which there is a local maximum, a mean, or a median of the statistical distribution 80, with the offset 81 being then the determined as difference of this lateral position from the lane position according to electronic map data. It will be appreciated that the reference relative to which the offset 81 is determined is not necessarily germane, and the offset 81 can also be determined relative to another suitable reference (such as the straight line connecting the 2 nodes at the ends of the segment).

Figure 6 shows a simple case in which the statistical distribution has a single local maximum. Depending on the real-world separation of lanes, more complex distributions may be obtained, as illustrated in Figure 7.

Figure 7 shows another exemplary statistical distribution 80 to determine as described above. The statistical distribution 82 has several local maxima, each associated with a different one of several lanes. In such a case, a lane-specific offset 83, 84 may respectively be determined as a difference between the bin that corresponds to the local maximum, mean, or median of the respective peak from the lane position expected according to electronic map data.

It will be appreciated that, due to regulatory effects, the statistical distribution 80, 82 may have a bias. For illustration, in countries in which vehicles are supposed to drive on the right hand side, more probes may be recorded for the right-hand lane. Similarly, for countries in which vehicles are supposed drive on the left inside, more probes may be recorded for the left-hand lane. This bias can also be detected based on the probe data entered may be taken into account when determining the lane-specific offset.

Thus, the at least one processing circuit may be operative such that determining the lateral offset of the GNSS-based lateral lane position (determined from the probe data 48) from the lane position expected according to electronic map data comprises compensating for a bias caused by a country specific regulatory requirement, wherein the bias may optionally be determined based on the probe data 48.

The processing disclosed herein may be performed for a plurality of segments and, optionally, possibly even for several locations within a same segment of the navigable network.

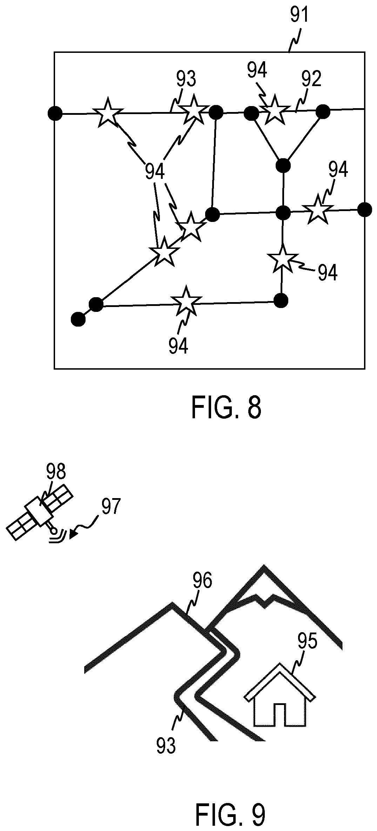

Figure 8 schematically shows a portion 91 of a navigable network. The navigable network comprises a plurality of segments 92, 93. Each segment 92, 93 may be defined by at least two nodes. The processing system 20 may be operative to receive and process the probe data from probes passing a plurality of locations 94 on the navigable network and determine the lane-specific offsets for each of the plurality of locations 94.

As it is only the lateral offset from a line extending along the extension direction of the respective segment that matters in the processing discussed herein, the distance measured perpendicularly to the extension direction can readily be determined based on the GNSS-based position data. For illustration, a local coordinate transform may be performed for each location 94 to take into account the orientation of the segment. The processing system 20 may then perform the determination of the offset between the GNSS-based lateral lane position and the lane position expected according to the electronic map data as previously discussed.

Not only the lane-specific offsets but also additional lane-specific data that can take into account the lane-specific offsets, such as lane-specific speeds determined using the improved probe lane assignment that takes into account the lane-specific offsets, may be determined for each of a plurality of locations 94 on several segments of the navigable network.

As previously mentioned, offsets between GNSS-based lane locations from the probe data 48 and the electronic map may have various root causes, including construction or maintenance work (as illustrated in Figure 2), or other root causes such as GNSS signal distortions.

Figure 9 is a schematic illustration of scenarios in which GNSS signal distortions may occur. For illustration, GNSS signal reflections off buildings 94 adjacent the segment 93 and/or terrestrial features 96 (such as cliffs or gorge side walls) may give rise to an offset that can be corrected to improve the probe lane assignment, using the techniques disclosed herein. Atmospheric effects along a GNSS signal propagation path 97 from a GNSS satellite 98 can also give rise to an offset that can be corrected to improve the probe lane assignment, using the techniques disclosed agent.

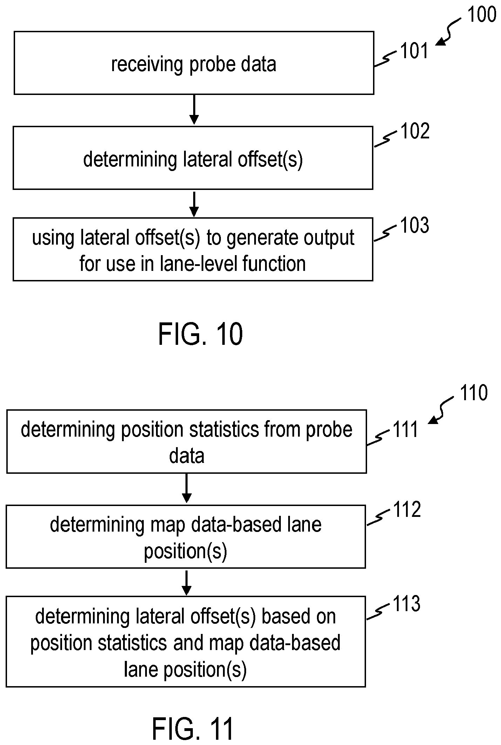

Figure 10 is a flow chart of a method 100. The method 100 may be performed automatically by or using the processing system 20 or by a system that comprises the processing system 20.

At process block 101, the processing system 20 receives the probe data 48 comprising GNSS-based position data. The GNSS-based position data may comprise GPS fixes and/or a GPS traces. The probe data may comprise data other than GNSS-based position data, such as vehicle speeds collected by a speed sensor are different from the GNSS receiver of the probe. The processing system 20 may be operative to receive the probe data 48 from the probes via a communication system that may comprise a wide area network (WAN) and/or a cellular communication system.

At process block 102, the processing system 20 determines the lateral offset between GNSS-based lateral positions of lanes, derived from the probe data 48, and a reference that extends along the extension direction (such as a center of the road represented by the segment or centerlines of individual lanes). Determining the offset may comprise determining a statistical distribution of GNSS-based lateral positions of probes passing by a location on the segment, and using the statistical distribution to determine the offset. Determining the offset may comprise determining a lane-specific lateral offset for each of several lanes having a same driving direction.

At process block 103, the processing system 20 uses the determined offsets to generate output useful in performing a lane level traffic-based function. The output may comprise the lane-specific offsets. The output may alternatively or additionally comprise lane-specific data determined using the lane-specific offsets. For illustration, the lane-specific offsets may be used to improve the probe lane assignment, with lane-specific speeds being determined based on the improved probe lane assignment that takes into account the lane-specific offsets. Alternatively or additionally, lane-specific blockages may be determined using a probe lane assignment that takes into account the lane-specific offsets. Such lane-specific data may be used by the processing system 20 or may be provided by the processing system 20 for performance of a lane level traffic-based function, such as a lane level traffic-based route guidance, route search, driver assistance, ADAS, and/or autonomous driving function.

Figure 11 is a flow chart of a process 110. The process 110 may be performed automatically by the processing system 20 or by a system that comprises the processing system 20. The process 110 may be performed to implement process block 102 of Figure 10.

At process block 111, the processing system 20 determines statistical information from a GNSS-based position data of probes passing a location on a segment of the navigable network. The statistical information may be a statistical distribution indicating fractions of vehicles having lateral distances from a reference (such as a center of the road represented by the segment or a center line of an individual lane), for example for various bins, each associated with a distance range as explained with reference to Figure 6 and Figure 7.

At process block 112, the processing system 20 determines the lateral lane positions expected at the location-based on the electronic map data. If the electronic map data has stored therein information on lane widths, the processing system 20 may use the stored lane with information to determine the lateral lane positions from the electronic map data. Alternatively, if the electronic map data does not have stored therein explicit information and lane widths, the processing system 20 may use an estimate for the lane width in association with a road class for the segment specified by the electronic map data (such as a functional road class) to estimate the lane width and use the estimated lane width for determining the lateral lane positions expected according to the electronic map data. The lateral lane positions are dependent on the number of lanes (which may be explicitly given in the electronic map data or derivable from probe class information) in association with the lane widths.

At process block 113, the processing system 20 determines the lane-specific offset based on the statistical information of GNSS-based lateral lane positions (derived from the probe data) and the lateral lane positions expected according to the electronic map data.

As previously explained, the lane-specific offset may be provided for use in improving probe lane assignment, may be used for improving probe lane assignment, and/or may be used in association with other lane-specific information (such as lane-specific speeds) for performance of a lane level traffic-based function.

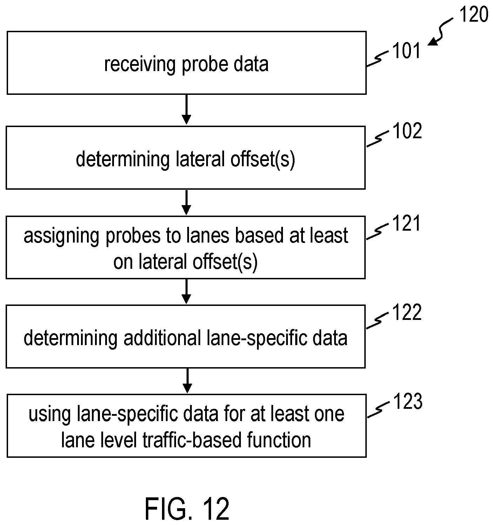

Figure 12 is a flow chart of a method 120. The method 120 may be performed automatically by the processing system 20 or by a system comprising the processing system 20.

Process blocks 101 and 102 may be implemented as previously explained with reference to Figure 10.

At process block 121, the processing system 20 or a computing system or device separate from the processing system and communicatively coupled to the processing system 20, performs a probe lane assignment. The probe lane assignment comprises assigning, based on the GNSS-based position data, probes to lanes of segments of the navigable network. In the probe lane assignment, the previously determined lateral offsets between GNSS-based lateral probe positions and the lateral lane positions expected according to the electronic map data are compensated, at least in part. This may be done in various ways, for example by applying a shift to the GNSS-based lateral probe positions prior to comparing them to the lateral lane positions expected based on the electronic map data. Taking into account the offset may comprise applying a shift to the map-based lateral lane positions expected according to the map data, prior to comparing them to the GNSS-based lateral probe positions. The probe lane assignment may comprise recording, for each of the probes for which the probe lane assignment has been performed, to which lane of the respective segment the probes has been assigned.

At process block 122, additional lane-specific data is determined, using the probe lane assignment performed at process block 121 (which takes into account the lane-specific offsets). Determining the additional lane-specific data may comprise determining a lane-specific speed, using speed data derived from the GNSS-based position data and/or speed data included in the probe data 48, in association with the result of the probe lane assignment recorded at process block 121. Determining the lane-specific speed for a segment may comprise determining a lane-specific speed for each of several lanes, respectively based only on speeds of those probes assigned to the respective lane when taking into consideration the lane-specific offset. Alternatively or additionally, determining the additional lane-specific data at process block 122 may comprise determining a lane-specific blockages, again using only the probe data of those probes assigned to the respective lane when taking into consideration the lane-specific offset.

At process block 123, the lane-specific data comprising the additional lane-specific data determined at process block 122 is used by the processing system 20 and/or the computing system or device separate from the processing system 20 to perform the at least one lane level traffic-based function. The at least one lane level traffic-based function may comprise a lane level traffic-based route search, route guidance, driver assistance, ADASs, and/or autonomous driving function.

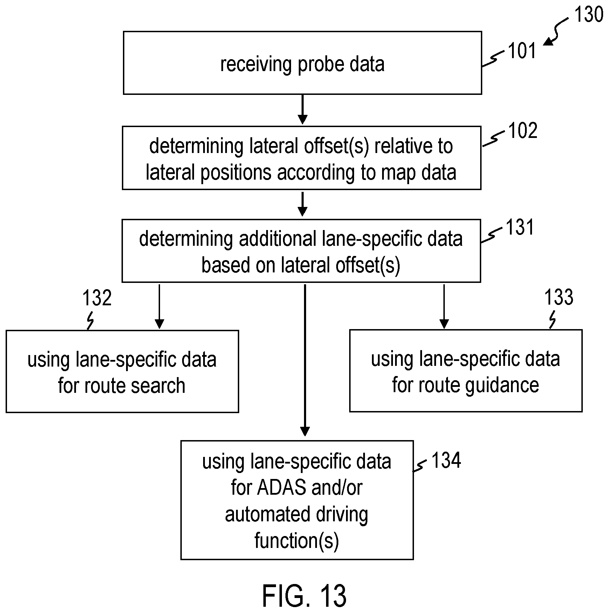

Figure 13 is a flow chart of a method 130. The method 130 may be performed automatically by the processing system 20 or by a system comprising the processing system 20.

Process blocks 101 and 102 may be implemented as previously explained with reference to Figure 10.

At process block 131, additional lane-specific data is determined, using the lateral offsets of GNSS-based lateral positions (from the probe data 48) and the lateral position determined based on the electronic map data. The additional lane-specific data may be determined by the processing system 20 or a computing system or device communicatively coupled with the processing system 20. Determining the additional lane-specific data may comprise determining a lane-specific speed, using speed data derived from the GNSS-based position data and/or speed data included in the probe data 48, in association with the GNSS-based position of the respective probe and the lateral offset obtained from the GNSS-based position data of several probes at process block 102. Determining the lane-specific speed for a segment may comprise determining a lane-specific speed for each of several lanes, respectively based only on speeds of those probes assigned to the respective lane when taking into consideration the lateral offset. Alternatively or additionally, determining the additional lane-specific data may comprise determining a lane-specific blockages, again using only the probe data of those probes assigned to the respective lane when taking into consideration the lateral offset.

The method may comprise one, several or all of process blocks 132, 133, and 134.

At process block 132, the additional lane-specific data may be used, by the processing system 20 or a computing system or device communicatively coupled to the processing system 20, to perform a route search, taking into consideration lane level traffic conditions as reflected by the additional lane-specific data. For illustration, lane level speeds may be taken into consideration when searching for the fastest route, in particular when lanes of a same driving direction are separated by an impenetrable barrier.

At process block 133, the additional lane-specific data may be used, by the processing system 20 or a computing system or device communicatively coupled to the processing system 20, to perform route guidance, taking into consideration lane level traffic conditions as reflected by the additional lane-specific data. For illustration, lane level speeds and/or lane level blockage information may be taken into consideration when providing route guidance, in particular when lanes of a same driving direction are separated by an impenetrable barrier.

At process block 134, the lane-specific data may be used, for example by a computing system or device communicatively coupled to the processing system 20, to perform an ADAS and/or automated driving function, taking into consideration lane level traffic conditions as reflected by the additional lane-specific data. For illustration, lane level speeds may be taken into consideration for adaptive cruise control and/or lane keeping control. For further illustration, information on the lane-specific lateral offset may be used to perform lane keeping assistance.

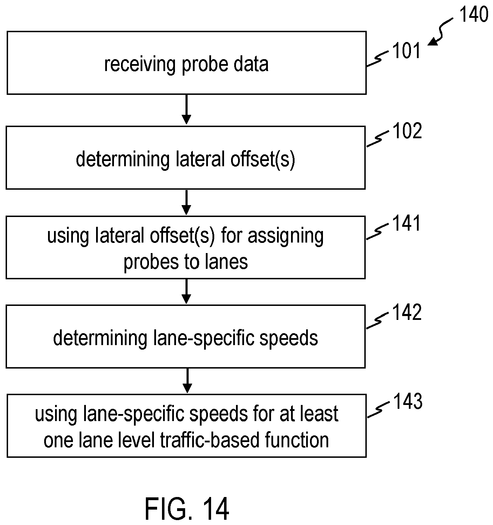

Figure 14 is a flow chart of a method 140. The method 140 may be performed automatically by the processing system 20 or by a system comprising the processing system 20.

Process blocks 101 and 102 may be implemented as previously explained with reference to Figure 10.

At process block 141, the processing system 20 or a computing system or device separate from the processing system and communicatively coupled to the processing system 20, performs a probe lane assignment. The probe lane assignment comprises assigning, based on the GNSS-based position data, probes to lanes of segments of the navigable network. In the probe lane assignment, the previously determined lateral offsets between GNSS-based lateral probe positions and the lateral lane positions expected according to the electronic map data are compensated, at least in part. This may be done in various ways, as already explained herein. The probe lane assignment may comprise recording, for each of the probes for which the probe lane assignment has been performed, to which lane of the respective segment the probes has been assigned.

At process block 142, additional lane-specific data comprising lane-specific speeds is determined, using the probe lane assignment performed at process block 141 (which takes into account the lane-specific offsets). Determining the additional lane-specific speeds may be performed using speed data derived from the GNSS-based position data and/or speed data included in the probe data 48, in association with the result of the probe lane assignment at process block 141. Determining the lane-specific speed for a segment may comprise determining a lane-specific speed for each of several lanes, respectively based only on speeds of those probes assigned to the respective lane when taking into consideration the lane-specific offset.

At process block 143, at least the lane-specific speeds are used by the processing system 20 and/or the computing system or device separate from the processing system 20 to perform the at least one lane level traffic-based function. The at least one lane level traffic-based function may comprise a lane level traffic-based route search, route guidance, driver assistance, ADASs, and/or autonomous driving function.

In addition or alternatively to using the determined lane-specific offsets for determining the lane-specific speeds, clustering of probe speeds may be performed to aid in the correct assignment of probes to lanes. Thereby, the processing system 20 can take advantage of the fact that probe speeds may be indicative of and vary with lane, for at least some traffic situations.

While determining the lane-specific offsets and probe speed clustering both involve statistics based on several probes on a segment, the time scales are typically different. The processing system 20 may be operative to determine the lane-specific offset for use in probe lane assignment by collecting and evaluating GPSS-based position data of probes over a first time interval, and to perform probe speed clustering based on probe speeds over a second time interval, wherein the second time interval has a shorter duration than the first time interval.

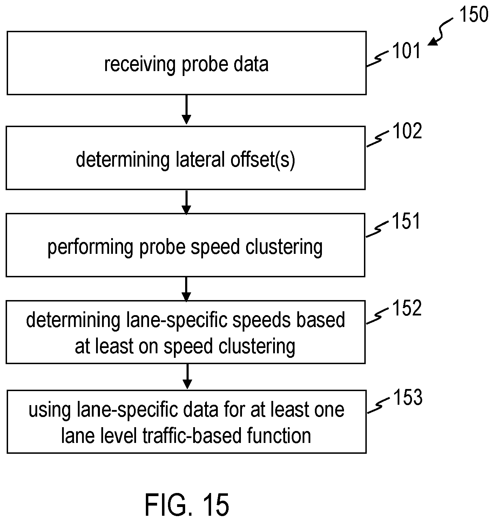

Figure 15 is a flow chart of a method 150. The method 150 may be performed automatically by the processing system 20 or by a system comprising the processing system 20.

Process blocks 101 and 102 may be implemented as previously explained with reference to Figure 10.

At process block 151, the processing system 20 performs a probe speed clustering. The probe speed clustering may be performed using speed data derived from the GNSS-based position data and/or speed data included in the probe data 48. The probe speed clustering may comprise verifying that distinguishable speed clusters are obtained, using known techniques such as a Pearson distance measure.

At process block 152, lane-specific speeds are determined based at least on the results of the probe speed clustering. Lane-specific speeds may be determined based on the speed clusters. An assignment to different lanes may be performed based on the known characteristic variation of probe speeds for a given country (depending on whether there is right-hand or left-hand traffic). Alternatively or additionally, probe lane assignment using the lateral offset from process block 102 may be used to aid the determination of lane-specific speeds.

At process block 153, at least the lane-specific speeds are used by the processing system 20 and/or the computing system or device separate from the processing system 20 to perform the at least one lane level traffic-based function. The at least one lane level traffic-based function may comprise a lane level traffic-based route search, route guidance, driver assistance, ADAS, and/or autonomous driving function.

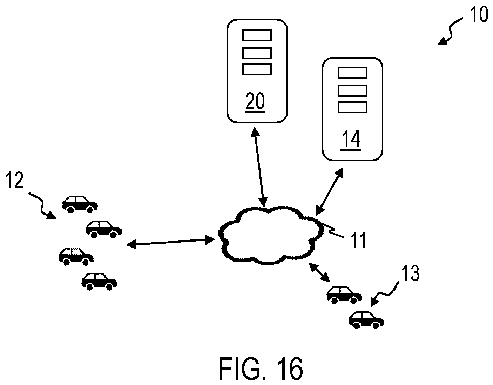

Figure 16 is a schematic representation of a system 10. The system 10 comprises the processing system 20.

The system 10 comprises a plurality of probes 12, which may include probes fixedly or removably arranged in the a plurality of vehicles. Each of the probes includes at least a GNSS-based receiver and a wireless interface operative to provide GNSS-based position data (and optionally of the probe data) to the processing system 20 via a communication system 11. The communication system 11 may comprise a WAN and/or a cellular network.

The processing system 20 is operative to process the probe data to generate lane-specific data. The lane-specific data may include, for each of several segments of the navigable network, a lateral offset between GNSS-based lateral positions measured by the probes 12 and the lateral lane position expected according to electronic map data. The lane-specific data may alternatively or additionally include other lane-specific data, such as lane-specific speeds or lane-specific blockages, which are useful for performance of at least one lane level traffic-based function. At least some of the several lane-specific data may be based on a probe lane assignment that takes into consideration the lane-specific offset determined by the processing system 20.

The processing system 20 may be operative to use the lane-specific data to perform functions such as a lane level traffic-based route search and/or a lane level traffic-based route guidance and may be operative to provide results of the route search and/or route guidance for outputting via a human machine interface (HMI). Alternatively or additionally, the processing system 20 may be operative to provide output including or otherwise based on the lane-specific data for use in performance of at least one lane level traffic-based function for use by a computing system 14 and/or a device installed in at least one vehicle 13 and/or for use by at least some of the probes 12. The computing system 14 and/or device installed in the at least one vehicle 13 may be operative to perform, based at least one the output received from the processing system 20, the at least one lane level traffic-based function, such as a lane level traffic-based route search, a lane level traffic-based route guidance, a lane level traffic-based driver assistance function, a lane level traffic-based ADAS function, and/or a lane level traffic-based autonomous driving function. The computing system 14 may alternatively or additionally also be operative to provide functions such as providing, based on the output of the processing system 20, map data that depends on the output of the processing system 20. For illustration, the computing system 14 may comprise at least one map server and may be operative to update electronic map data responsive to the output of the processing system 20 indicating that there is change in lane geometry as compared to a currently used version of the electronic map data. The computing system 14 may distribute the electronic map data, updated based on the output of the processing system 20, for use in performance of at least one lane level traffic-based function.

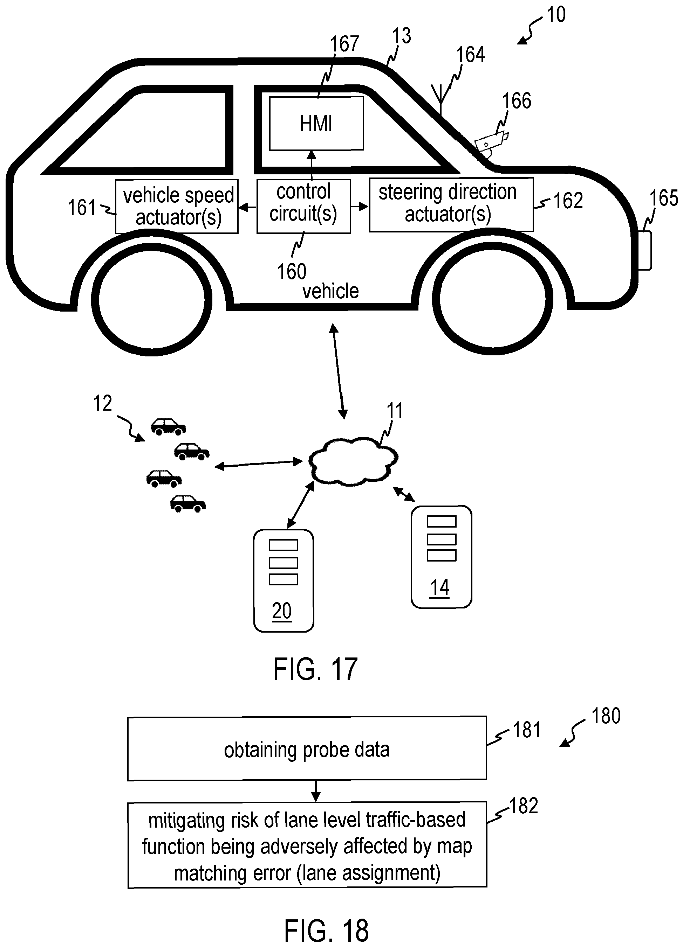

Figure 17 is a schematic representation of a system 10. The system 10 comprises the processing system 20.

The system 10 comprises a plurality of probes 12, which may include probes fixedly or removably arranged in the a plurality of vehicles. Each of the probes includes at least a GNSS-based receiver and a wireless interface operative to provide GNSS-based position data (and optionally of the probe data) to the processing system 20 via a communication system 11. The communication system 11 may comprise a WAN and/or a cellular network.

The system 10 comprises a vehicle 13. The vehicle 13 comprises at least one control circuit 160 (i.e., one or several control circuits 160). The at least one control circuit 160 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

The vehicle 13 comprises a wireless interface 164 operative to receive the output provided by the processing system 20 and/or electronic map data provided by a map server 14 responsive to the output of the processing system 20, which is based at least on the lane-specific data determined by the processing system 20. The at least one control circuit 160 may be operative to perform one or several control operations-based on the output provided by the processing system 20 and/or the electronic map data provided by the map server 14 responsive to the output of the processing system 20. For illustration, the at least one control circuit 160 may be operative to use the received data, which depends on the lane-specific data provided by the processing system 20, to perform lane level traffic-based route guidance and/or route search. The at least one control circuit 160 may be operative to control an HMI 167 of the vehicle 13 to output a result of the lane level traffic-based route search and/or route guidance.

Alternatively or additionally, the at least one control circuit 160 may be operative to control one or several actuators of the vehicle 13 based on the received data, which is dependent on the lane-specific data determined by the processing system 20. The one or several actuators may comprise a vehicle speed actuator 161 which is operative to be actuated to influence the vehicle speed or engine torque, and/or a steering direction actuator 162 which is operative to be actuated to influence a driving direction of the vehicle 13. The at least one control circuit 160 may be operative to perform an ADAS function and/or autonomous driving function based on the received data, which is dependent on the lane-specific data determined by the processing system 20, comprising an actuator control operation in which at least one vehicle actuator 161, 162 is controlled.

The at least one control circuit 160 may be operative to perform the lane level traffic-based ADAS function and/or autonomous driving function based on both the data received via the interface 164 and sensor data captured using one or several onboard a vehicle sensors 165, 166, which may comprise a distance sensor 165 and/or at least one camera 166. For illustration, the at least one control circuit one 160 may be operative to combine lane-specific data received via the interface 164 (such as a lane-specific offset) with sensor data captured by the onboard sensor or onboard sensors 165, 166 to generate a world model of the vehicle environment, which is then used to perform the lane level traffic-based ADAS function and/or autonomous driving function.

Figure 18 is a flow chart of a method 180. The method 180 may be performed automatically by or using the processing system 20 or by a system 10 that comprises the processing system 20.

At process block 181, the processing system 20 receives the probe data 48 comprising GNSS-based position data. The GNSS-based position data may comprise GPS fixes and/or a GPS traces. The probe data may comprise data other than GNSS-based position data, such as vehicle speeds collected by a speed sensor are different from the GNSS receiver of the probe. The processing system 20 may be operative to receive the probe data 48 from the probes via a communication system that may comprise a wide area network (WAN) and/or a cellular communication system.

At process block 182, the processing system 20 and/or the system 10 mitigates the risk of incorrect lane assignment in situations in which GPSS-based lateral probe positions have a shift, for a location at the navigable network, relative to lateral lane positions expected according to electronic map data. Process block 182 may comprise using the processing system 20, the system 10, or the method according to any aspect or embodiment disclosed herein to enhance the safety of intended functionality of a lane level traffic-based function, including reducing the risk of incorrect probe lane assignment by the processing system 20, the system 10, or the method according to any aspect or embodiment disclosed herein.

While embodiments have been described with reference to the drawings, modifications and alterations may be implemented in other embodiments. While exemplary use cases in which the methods and vehicle processing system can be applied have been described in detail, the techniques disclosed herein may be used in association with a variety of additional scenarios.

For illustration,
- while embodiments have been described in which lane-specific offsets are determined based on a comparison of GNSS-based lateral probe positions and electronic map data, the processing system 20 may also be operative to take into account additional information when determining the lane-specific offset. For illustration, the processing system 20 may be operative to perform a web crawling operation to retrieve information on scheduled maintenance or construction work and use the retrieved information in combination with the probe data. This may include determining at which segments of the navigable network the lane-specific offset is to be determined and/or verifying that the lane-specific offset determined for the segment is consistent with the scheduled maintenance or construction work.
- while embodiments have been described in which the processing system 20 is operative to use probe data from a plurality of probes 12, the probes 12 and processing system 20 may be operative for bidirectional communication, with the probes 12 utilizing the output provided by the processing system 20 to perform the at least one lane level traffic-based function.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method of processing probe data (48) for performance of at least one lane level traffic-based function, the method comprising:
receiving, by a processing system (20), the probe data (48) from a plurality of probes (12) travelling on a navigable network (91), wherein the probe data (48) comprises global navigation satellite system, GNSS,-based position data;
determining, by the processing system (20), lane-specific data for a segment (92, 93) of the navigable network identified based at least on the GNSS-based position data, wherein determining the lane-specific data comprises determining a lane-specific offset (81; 83, 84) in a direction (59) transverse to an extension direction (58) of the segment (92, 93) based at least on the probe data (48) from probes on the segment (92, 93); and
providing or using the lane-specific data for the performance of the at least one lane level traffic-based function.

2. The method of claim 1, wherein providing or using the lane-specific data comprises
correcting an error in an GNSS-based lane assignment based at least on the lane-specific offset (81; 83, 84), and/or
generating output (49) based at least on the lane-specific offset (81; 83, 84), the output (49) enabling an error in an GNSS-based lane assignment to be corrected,
wherein the GNSS-based lane assignment assigns the GNSS-based position data to a lane of the segment (92, 93), wherein the GNSS-based lane assignment comprises a map matching.

3. The method of claim 2, wherein the lane-specific-offset (81; 83, 84) comprises an offset (81; 83, 84) caused by at least one of:
GNSS signal reflections at one or several structures (95, 96) adjacent the segment (92, 93);
atmospheric effects on GNSS signal propagation;
temporary changes in lane geometry (66-68).

4. The method of any one of the preceding claims, wherein providing or using the lane-specific data comprises identifying a lane geometry change (66-68).

5. The method of claim 4, wherein the lane geometry change comprises a temporary change in lane routing caused by maintenance or construction work.

6. The method of claim 4 or claim 5, wherein the lane geometry change is associated with an offset (81; 83, 84) of the lane relative to a lane position expected according to electronic map data in the direction (59) transverse to the extension direction of the segment (92, 93).

7. The method of any one of the preceding claims, further comprising performing, by the processing system (20) or by a computing system (14) or device (160) distinct from the processing system (20), a probe lane assignment to determine on which lanes of the segment (92, 93) the probes on the segment (92, 93) are located based at least on the GNSS-based position data and the lane-specific data, wherein the at least one lane level traffic-based function is performed based on the probe lane assignment.

8. The method of any one of the preceding claims, wherein determining the lane-specific data comprises determining a lane-specific speed for each of several lanes of the segment (92, 93) based on probe speeds of the probes on the segment (92, 93) obtained from the probe data (48).

9. The method of claim 8, wherein determining the lane-specific speed comprises clustering the probe speeds of the probes on the segment (92, 93).

10. The method of claim 8 or claim 9, wherein determining the lane-specific speed comprises distinguishing lane-specific speed effects from temporal speed effects.

11. The method of any one of claims 8 to 10, wherein providing or using the lane-specific data comprises correcting, by the processing system (20) or a system (14) or device (160) distinct from the processing system (20), a lane assignment based on the lane-specific speed.

12. The method of any one of the preceding claims, wherein the at least one lane level traffic-based function comprises one, several, or all of:
route search or route guidance, optionally route search or route guidance performed based at least on the lane-specific data for a segment (92, 93) that has a physical barrier (64) between lanes assigned to a same driving direction;
identification of incorrect lane data in an electronic map;
identification of maintenance work;
traffic flow control;
deployment of map updates.

13. A machine-readable instruction code comprising instructions which, upon execution by at least one processing circuit of a processing system (20), cause the processing system (20) to perform the method of any one of the preceding claims.

14. A processing system (20) for processing probe data (48) for performance of at least one lane level traffic-based function, the processing system (20) comprising:
at least one interface (21) operative to receive the probe data (48) from a plurality of probes travelling on a navigable network, wherein the probe data (48) comprises global navigation satellite system, GNSS,-based position data;
at least one processing circuit (30) operative to
determine lane-specific data for a segment (92, 93) of the navigable network identified based at least on the GNSS-based position data, wherein determining the lane-specific data comprises determining a lane-specific offset (81; 83, 84) in a direction transverse to an extension direction of the segment (92, 93) based at least on the probe data (48) from probes on the segment (92, 93); and
provide or use the lane-specific data for the performance of the at least one lane level traffic-based function.

15. A system (10), comprising:
the processing system (20) of claim 14;
at least one device (160) operative to receive the lane-specific data and perform the at least one lane level traffic-based function based at least one the received lane-specific data.
